# EUROPEAN PATENT APPLICATION

(11) **EP 1 310 892 A2**
(43) Date of publication of application: **14.05.2003**
(21) Application number: 02024528.8
(22) Date of filing: 31.10.2002
(51) Int. Cl.: G06F 17/60

(54) **Business management system, method, and program**

(30) Priority: 02.11.2001 JP 2001338385
(71) Applicant: Ricoh Company, Ltd., Tokyo 143-8555 (JP)
(72) Inventor: Koide, Masao, Ricoh Company, Ltd., Tokyo 143-8555 (JP); Ikezawa, Toyoji, Ricoh Company, Ltd., Tokyo 143-8555 (JP)
(74) Representative: Schwabe - Sandmair - Marx

(57) **Abstract**

In order to efficiently form a sales team, a SFA server 1 reads prescribed customer data of a prescribed case from various customer data previously stored in a customer DB. Then, the SFA server 1 determines if the prescribed case needs sales team formation in a business meeting in accordance with the contents of the customer data. If it is determined that the business meeting of the prescribed case needs the sales team formation, the SFA server 1 designates a sales person who forms a sales team, and generates request information requesting sales team formation. The SFA server 1 transmits the requesting information to the terminal of the designated sales person.

## Description

### BACKGROUND OF THE INVENTION:

### 1. Field of the Invention

This invention relates to a business management system, method, and a computer program, and in particular, to a business management system, method, and computer program capable of forming a sales team in a business meeting held on a prescribed item with a customer using a network.

### 2.Discussion of the Background art

Conventionally, when performing operating activities while forming a sales team, a sales person, who is in charge of a business meeting with a customer on a prescribed item, occasionally needs help of the other sales person of its own company or the other sales company that provides a consign system, for example, who has skill of a specified product (herein after referred to as a specialized sales person), in order to jointly form the sales team by means of either an electronic mail or telephone call. As a result, unproductive labor and time are necessitated by such communications before forming the sales team. Furthermore, selecting an appropriate specialized sales person according to the prior art required a large amount of computing time and computing power as well as a relatively sophisicated telecommunication environment, e.g. for contacting and appointing an appropriate specialized sales person.

In view of the above described problem, this invention attempts to provide a business management system , method and computer program capable of efficiently forming a sales team and performing operation activities. The invention also attempts to provide a business management system, a method for forming a sales team and computer program for omitting, or at least reducing, the labor and time which are generally needed when the sales team is formed. Another object of the present invention is to provide a business management system, a method for forming a sales team and computer program capable of automatically selecting one or more specialized sales persons and scheduling such selected persons for a business meeting in an automatic and highly efficient manner thus reducing technical requirements e.g. with regardto computing time and computing power required and the standards of the telecommunication equipment.

This problem is solved by a business management system according to claim 1, by a method for forming a sales team according to claim 9 and by a computer program according to claim 17. Further advantageous embodiments are the subject-matter of the dependent claims.

### Problem Resolving Devices (SUMMARY)

To achieve the above-described object, the first aspect of this invention is characterized in that a business management system requests a prescribed sales person for forming a sales team in a prescribed case of a business meeting. The business management system includes a business meeting data memory stored with business meeting data representing details of a business meeting held with a customer, a business meeting data reading device configured to read prescribed business meeting data of a prescribed case from the business meeting data memory, a determining device configured to determine if the prescribed case requires sales team formation in a business meeting in accordance with the business meeting data of the prescribed case, and a sales person designating device configured to designate a sales person who forms a sales team, if the business meeting of the prescribed case needs the sales team formation. A request information generating device is included so as to generate request information requesting sales team formation. A request information transmitting device is also included so as to transmit the request information to a terminal of the designated sales person.

Thus, a sales person forming a sales team can be efficiently determined, and accordingly, labor and time required therefor can be suppressed.

Further the business management system can further include a priority memory stored with priority data to be used for designating a sales person, who forms a sales team, in accordance with a prescribed business meeting level included in the business meeting data, a sales person priority memory stored with sales person forming a sales team and priority data assigned thereto, and a priority designating device configured to designate a appropriate priority in accordance with the business meeting data of the case. The sales person designating device can designate a sales person having the priority by referring to the priority data stored in the sales person priority memory.

According to another preferred embodiment an appropriate sales person is determined by searching for sales persons only with appropriate priority data assigned thereto by selecting a sales person for a sales or business meeting on the basis of some further search criteria by referring only to the previously determined sales person with the appropriate priority data assigned thereto. Thus, for selecting a specialized sales person it is not necessary to refer to the entire set of possible sales person each time an additional search criterion, e.g. priority, investment amount, availabilty for the sales or business meeting, is used (so-called nxn search in a data set with n individual data sets). Instead, the first criterion used reduces the search candidates for the next search criterion to be used. Thus, according to the present invention the technical requirements with regard to computing time and computing power can be reduced.

The above-described prescribed business meeting level can be any one of an expected investment amount and a fact of approach of a rival company to a customer.

Further the business management system can include a schedule data memory stored with schedule data representing schedule of sales persons. In addition, the sales person specifying device can refer to the schedule data and specifies an available sales person having the designated priority as a sales person who forms a sales team.

Further the business management system can include a going information obtaining device configured to obtain going information representing going of a case from business meeting data stored in the business meeting data memory. In addition, the going information obtaining device can generate request information by including the going information.

Further, the business management system can include an inputting device configured to allow input of business meeting data, a case identifying data generating device configured to generate case identifying data from one or more prescribed items included in the business meeting data; a case identifying data memory stored with the case identifying data, and a case identifying data writing device configured to write case identifying data in the case designation memory.

Further, the above-described one or more prescribed items can include at least any one of an occurrence date of a business meeting in a case, a name of a sales company, whom a business meeting has been cooperatively held, a name of a sales person who has held a business meeting with a customer, and a name of a product on which a business meeting has been held.

Further, the business management system can include a case type determining device configured to determine a case type in accordance with characteristics of a case indicated by the business meeting data; an operation information generating device configured to generate operation information representing details to be operated by a sales person forming a sales team in the case of the case type; and an operation information transmitting device configured to transmit the operation information to a terminal of the designated sales person forming the sales team.

The second aspect of the present invention is characterized in that a business management method requests a sales person who forms a sales team for sales team formation in a prescribed business meeting. The business management method includes the steps of: reading business meeting data of a prescribed case from the business meeting data memory; determining if the prescribed case requires sales team formation in a business meeting in accordance with the business meeting data of the prescribed case; designating a sales person who forms a sales team, if the business meeting of the prescribed case needs the sales team formation; generating request information requesting team formation; and transmitting the request information to a terminal of the designated sales person.

Thus, a sales person can be efficiently determined, and accordingly, labor and time required therefor can be suppressed.

Further, the business management method can include the steps of: designating a priority identifying a name of a sales person, who forms a sales team, in accordance with a prestored prescribed business meeting level included in business meeting data; referring to the previously stored priority assigned to sales persons capable of forming a sales team, in accordance with the details of the case; and designating the sales person having the designated priority.

The above-described prescribed business meeting level is one of an expected investment amount and a fact of approach of a rival company to a customer.

Further, the business management method can include the steps of: referring to schedule data representing schedule; and an available sales person who has the designated priority as a sales person forming a sales team.

Further, the business management method can include the steps of: obtaining going information representing going of the case from the business meeting data; and generating request information by including the going information.

Further, the business management method can include the steps of: inputting business meeting data; generating case identifying data, which identifies a case name included in the business meeting data, from one or more prescribed items included in the business meeting data; and writing case identifying data in the memory apparatus.

Further, the above-described prescribed item can include at least any one of an occurrence date of a business meeting of the prescribed case, a sales company, whom a business meeting is cooperatively held, a name of a sales person who has held a business meeting with a customer, and a name of a product on which a business meeting is held.

Further, the business management method can include the steps of: designating a case type in accordance with characteristics of a case indicated by the business meeting data; generating operation information representing details to be operated by a sales person forming a sales team in the case of the designated case type; and transmitting the generated operation information to a terminal of the designated sales person forming the sales team.

The third aspect of the present invention is characterized in that a computer readable program executes the method steps as outlined above. In particular, the following procedure can be performed when the computer readable program is read by and executed on a computer. The procedure includes the steps of: reading business meeting data of a prescribed case from the business meeting data memory; determining if the prescribed case requires sales team formation in a business meeting in accordance with the business meeting data of the prescribed case; designating a sales person who forms a sales team, when the business meeting of the case needs sales team formation; generating request information requesting sales team formation; and transmitting the request information to a terminal of the designated sales person.

Thus, a sales person can be efficiently determined, and accordingly, labor and time required therefor can be suppressed.

### BRIEF DESCRIPTION OF DRAWING

Hereinafter, preferred embodiments of the business management system, method and computer program therefor according to the present invention will be decribed by way of example only with reference to the accompanying drawings, wherein:
- Fig. 1: is a block chart illustrating a configuration of a business management system as one embodiment according to the present invention;
- Fig. 2: is a chart illustrating a configuration of a SFA server included in Fig. 1;
- Fig. 3: is a chart illustrating a construction of a memory included in Fig. 2;

- Fig. 4: is a chart illustrating a construction of a case number file included in Fig. 3;
- Fig. 5: is a chart illustrating a construction of a case type list included in Fig. 3;
- Fig. 6: is a chart illustrating a construction of an operation item list included in Fig. 3;
- Fig. 7: is a chart illustrating a construction of a specialized person determination list included in Fig. 3;
- Fig. 8: is a chart illustrating a construction of a rival company's approach priority list included in Fig. 3;
- Fig. 9: is a chart illustrating a construction of an expected investment amount priority list included in Fig. 3;
- Fig. 10: is a chart illustrating a construction of a schedule file included in Fig. 3;
- Fig. 11: is a flowchart illustrating an operation of determining a case number assigned to customer data of a new case;
- Fig. 12: is a flowchart illustrating a process of asking a sales person to form a sales team and notification of going of a business meeting;
- Fig. 13: is a chart illustrating a request information display screen or the like;
- Fig. 14: is a chart illustrating the other request information display screen or the like;
- Fig. 15: is a flowchart illustrating a process of notifying details of operation activities when a sales team is formed and operation activities are to be performed; and
- Fig. 16: is a chart illustrating an operation item display screen.

### PREFERRED EMBODIMENT

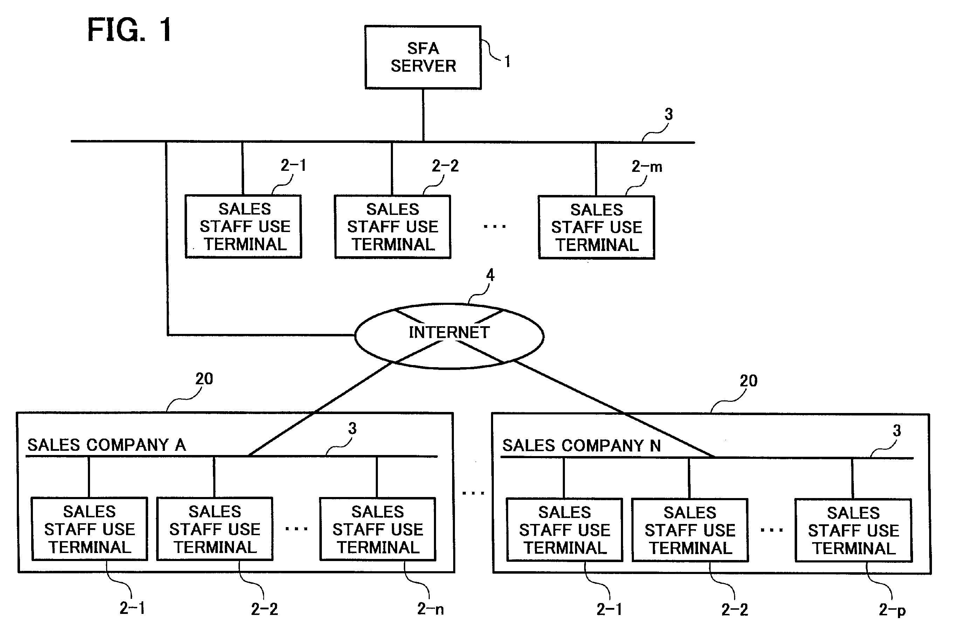

Throughout the drawings identical reference numerals relate to identical or similar elements, groups of elements, method steps or groups of method steps. In Fig. 1, a configuration of a business management system is illustrated as one embodiment according to the present invention.

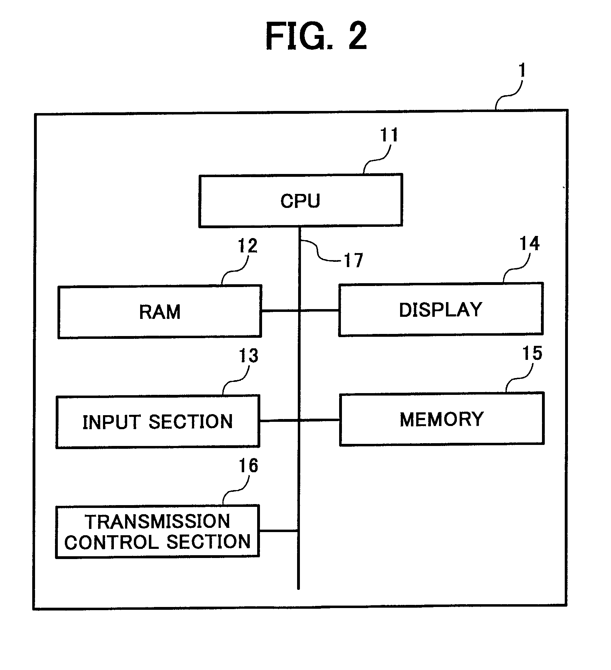

The business management system of this embodiment includes a SFA (Sales Force Automation) server 1, a plurality of sales staff use terminals 2 (2-1.....2-m, wherein legend "m" represents a total number of sales staff use terminals 2) installed in their own companies, and another sales staff use terminals 2 (2-1.....2-n, and 2-1.....2-p, wherein legend "n" and "p" represent total numbers of sales staff use terminals 2) installed in the respective sales companies A to N. Respective of the SFA server 1 and sales staff use terminals 2 of their own companies are connected to a LAN (Local Area Network) 3. Each of the sales staff use terminals 2 in the sales companies A to N is connected to a LAN 3 provided in each of the sales companies. The SFA server 1 is a server for managing operation activities of a product and includes a CPU (Central Processing Unit) 11, a RAM (Random Access Memory) 12, an inputting section 13, a display section 14, a memory 15, and a transmission control section 16 as illustrated in Fig. 2. Respective of the sections are connected to a bus 17.

The CPU 11 stores a control program such as a system program (i.e., OS) stored in a memory 15 and various application programs, executed by the system program or the like, in the RAM 12, and executes a later described processing in accordance with the control program.

In the RAM 12 there is stored the above-described control program, input designation contents and data, and processed resultant.

An inputting section 13 includes a keyboard which is equipped e.g. with such a cursor, a numeric input, and various function keys and outputs a signal to the CPU 11 when a key on the keyboard is pressed . The display section 14 comprises e.g. a liquid crystal display panel or the like, and displays information representing a running condition of the SFA server 1, for example.

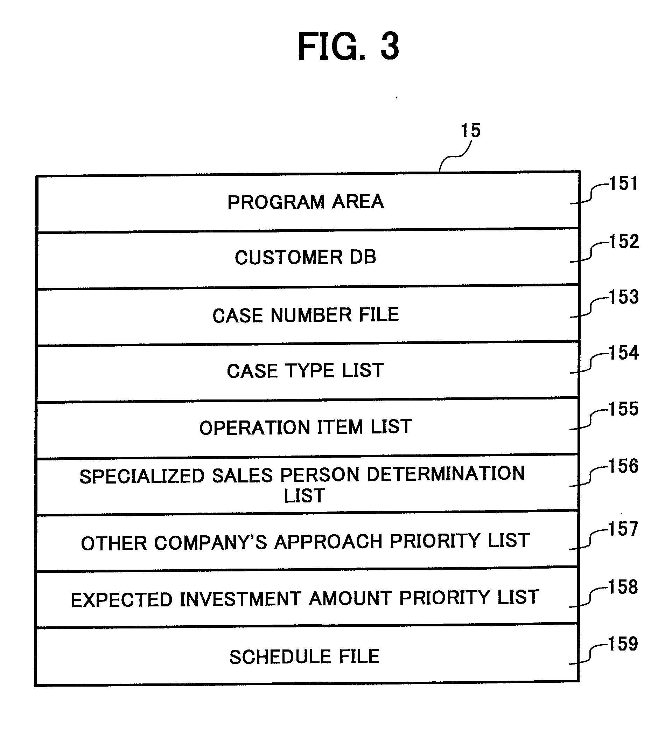

The memory 15 comprises a hard disc or the like, and, includes a program area 151 for storing the control program as illustrated in Fig. 3. The memory 15 stores all of a customer DB (Database) 152, a case number file 153, a case type list 154, an operation item list 155, a specialized person determination list, a rival company's approach priority list 157, an expected investment amount priority list 158, and a schedule file 159.

In the customer DB 152 there are stored customer data consisting e.g. of information on a customer and business meetings. The business meeting information indicates details of the business meeting held with a customer. In the customer DB 152 there is also stored the following information when a customer is a party. Specifically, a name of the party (company), an address (seat), a name of representative, and its age; a capital fund and business category of a customer, a sales amount, a bottom line, and gain of the last fiscal year, a score (maximum 100) evaluated and given to a customer by a credit research company, and a name of a unit included in the party are stored. Also, a name of a person in charge and belonging to the unit, telephone and facsimile numbers, a mail address, and a job title of the person are stored being parallelized to the above-described information.

In the customer DB 152 there is also stored information on planning and practical accomplishments of operation activities while parallelizing each of those to a customer and a case in progress. For example, in the customer DB 152 there is stored information, such as a product code assigned to a product to be sold to a customer, a product group code assigned to a product group that the product belongs to, a transaction case identification identifying a case of transaction with a customer, for example by parallelizing it to the above-described unit. In the customer DB 152 there is also stored information representing a difference between a planning and practical accomplishments (herein after referred to as a plan ripeness) executed in the case while parallelizing it to the transaction case identifying information.

The above-described plan ripeness is classified into the following nine steps (1) to (9) (herein after referred to as ripeness steps) in accordance with midterm targets (herein after referred to as a ripeness level) that should be achieved for completing a transaction. First one is a step of attempting a contact such as a first call to a new customer. Second is a step of establishing association with a customer by attempting to have a nodding acquaintance with a staff of a main unit and business job site of a customer. Third is a step of performing close investigation by researching facts, such as equipment vested in possession by a customer, competitor, etc., expected to effect on feasibility and condition of a contract. Fourth is a step of arousing desire of a customer. Fifth is a step of grasping an amount of investigation, and product or the like sought by the customer. Sixth is a step of sounding and extracting a problem to be resolved in order to furnish a product sought by the customer. Seventh is a step of proposing in honest a contract of furnishing the product. Eighth is a step of removing a contributing factor of discouraging conclusion of a contract. Ninth is a step of concluding the contract. These ripeness steps are getting higher (i.e., close to completion of the transaction) as the step advances from one to nine.

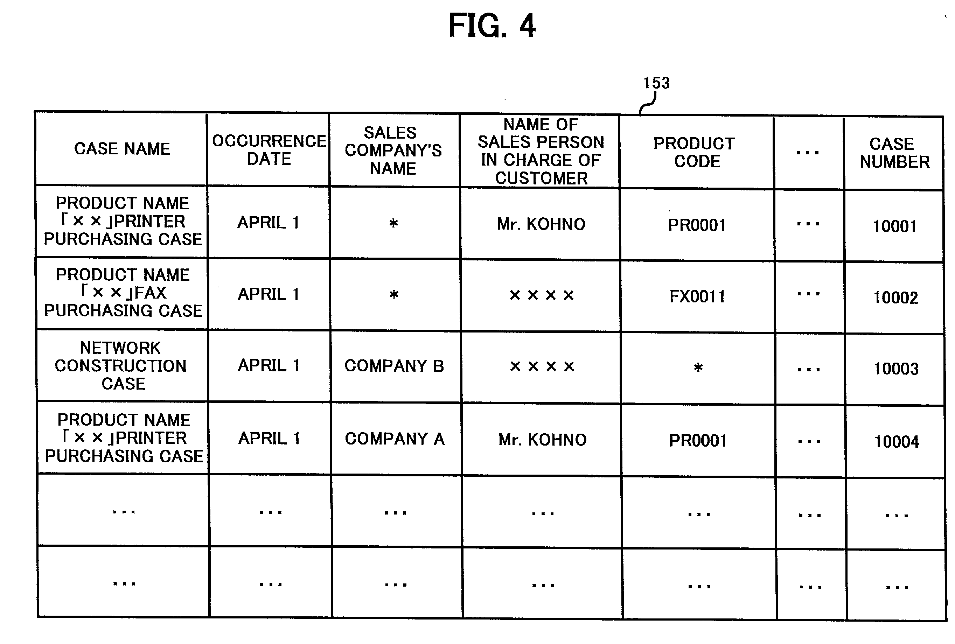

The case number file 153 is stored with case number related data that specifies a case of a business meeting held with a customer. As illustrated in Fig. 4, the case number data includes various data items, such as a name of the case, a name of a sales company if operation activities performed in a case are cooperatively performed therewith, a sales person having a charge of a case, a code of a product that is an objective of a case, and a case number assigned to a case name. The reason why the case number file 153 is employed is that if a case name indicates "a printer purchasing case", for example, a plurality of customer data having the same case name is highly likely stored in the customer DB 152, and desired customer data cannot be specified using the case name.

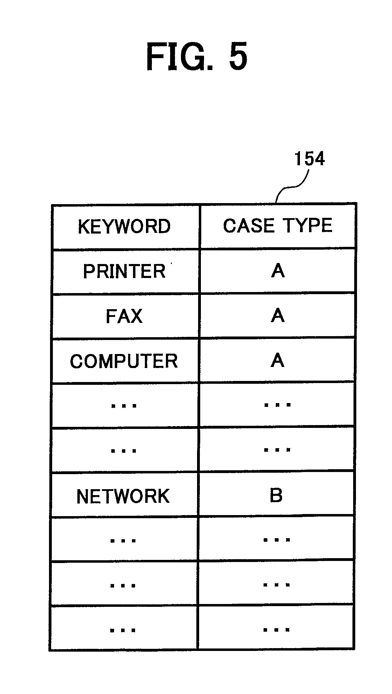

The case type list 154 determines a type of a case in accordance with a case name specified by the case number of the customer data. As illustrated in Fig. 5, the case type list 154 includes a name of the case type and a keyword for specifying the case type.

Specifically, there exist types "A" and "B".

The case of the type A represents a business meeting on selling a stand-alone type product, such as a printer, a facsimile, etc.The case of the type B in contrast represents a business meeting on a network construction, for example.

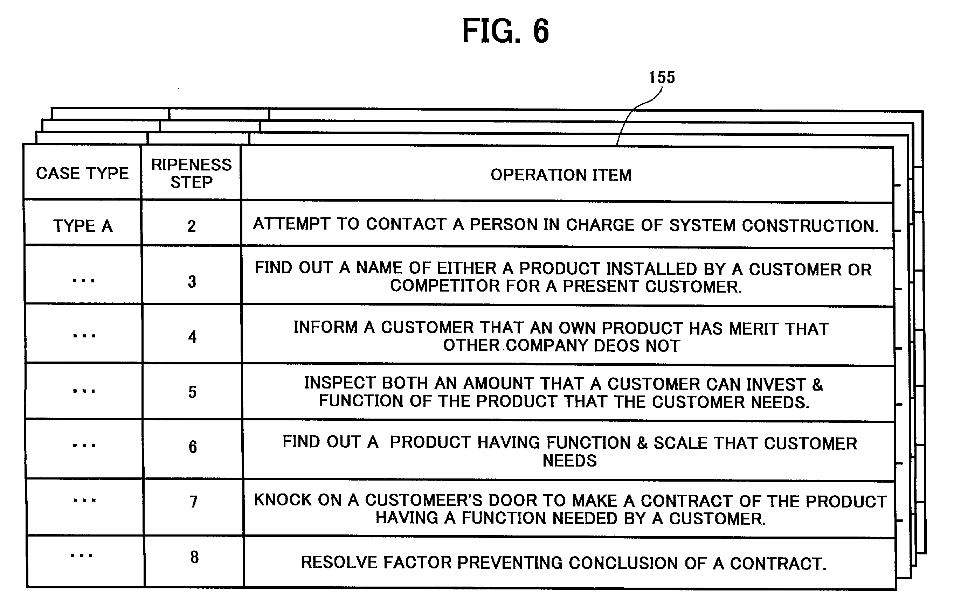

The operation item list 155 shown in Fig. 6 includes information representing details of operation activities to be operated by a sales person for a customer in respective ripeness steps per a case type as outlined above.

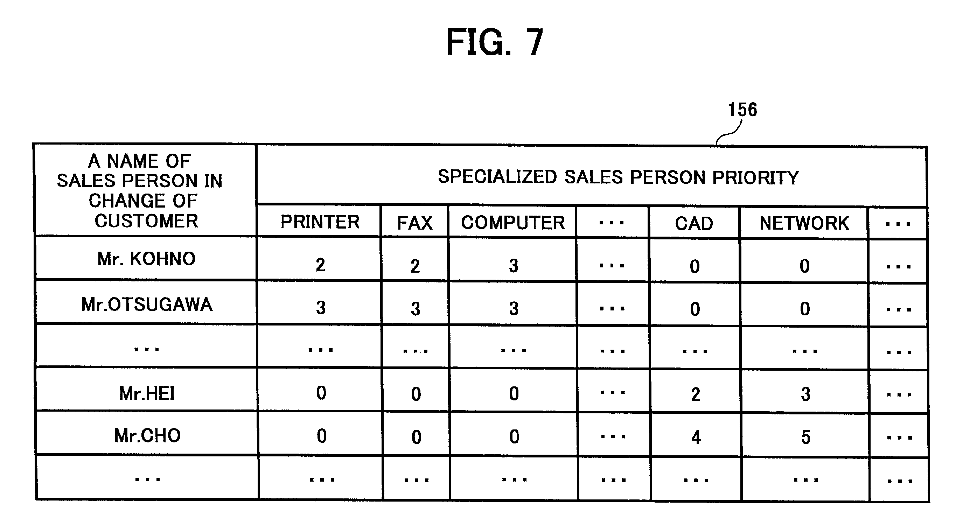

The specialized sales person determination list 156 is utilized when a specialized sales person forming a sales team is determined, and includes items of names of specialized sales persons and their priorities per a product or network construction business as illustrated in Fig. 7. The specialized sales person priority is the lowest when it is "1", and is the highest when it is "5". The priority is given in accordance with a prescribed skill, for example.

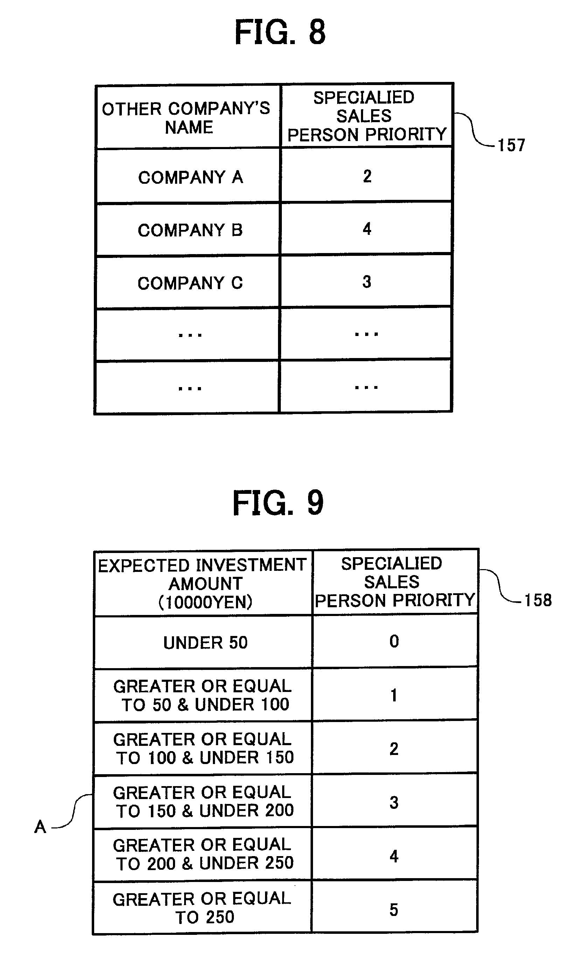

A rival company's approach priority list 157 is utilized in order to change a specialized sales person priority upon needs so as to rival a rival company, when a rival company has contacted the customer, and accordingly, a business meeting is to be promoted in a prescribed case. As illustrated in Fig. 8, a rival company's approach priority list 157 includes names of competitive companies, and priorities of specialized sales persons (for determining a prescribed one or more specialized sales persons) dispatched in order to rival the competitive company.

The expected investment amount priority list 158 is utilized so as to select a prescribed specialized sales person who will form a sales team in accordance with an expected amount of investment of a customer. As illustrated in Fig. 9, the expected investment amount priority list 158 includes items, such as an expected investment amount, a specialized sales person priorities given in accordance with the expected investment amount, etc. The specialized sales person priorities range from a level "0" to "5", wherein a level "0" represents that a sales team is needles to form with a specialized sales person, and that "5" represents that the highest specialized sales person is to be joined.

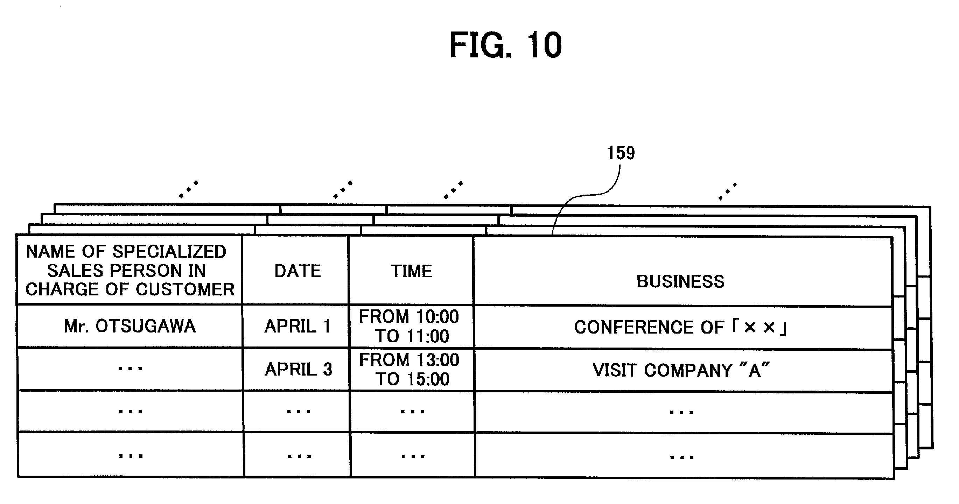

The schedule file 159 is stored with schedule data representing schedule of specialized and normal sales persons during a prescribed term. As illustrated in Fig. 10, the schedule data includes various data items such as a name of sales person, date and time, details of activities to be performed in the date and time, etc. The transmission control section 16 controls data communication with the sales staff use terminal 2.

Each of sales staff use terminals 2 and 3 of their own and the sales companies A to N illustrated in Fig. 1 includes a CPU, a RAM, an inputting section, a display, a memory, and a transmission control section (each not shown), each connected to the bus. The CPU executes processing in accordance with control program stored in the RAM.

In the RAM there is stored the control program, input designation contents, input data, and processed resultants. The inputting section includes a keyboard equipped with a cursor, numeral inputting, and various function keys, and a mouse serving as a pointing device. A CRT and liquid crystal display panel and so on collectively configure the display section. The memory is configured by a hard disc or the like and is stored with the control program. The transmission control section controls communication of data and similar with the SFA server.

Various operations of the business management system of this embodiment are now described with reference to three types of operations respectively performed when a case occurs and a case number is assigned thereto, when sales team formation request information is notified, and when operation items to be operated by a sales team when business activities are performed.

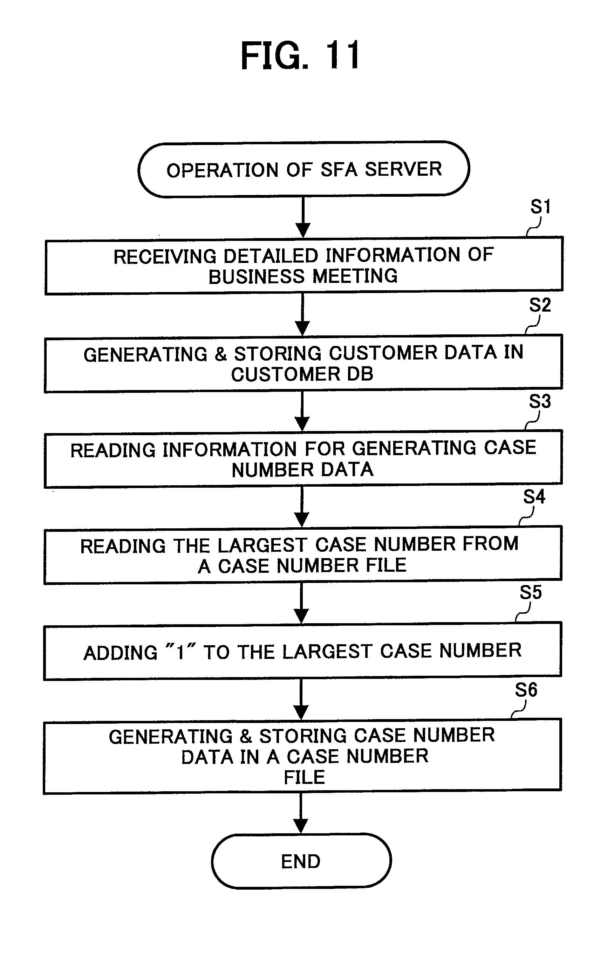

First, an operation of assigning a case number to a new case upon its occurrence is now described with reference to Fig. 11.

Upon receiving information representing details of a business meeting held with a customer from a prescribed sales staff use terminal 1 (in step S1), the SFA server 1 generates prescribed customer data from the information, and stores it in the customer DB 152 (in step S2). The SFA server 1 reads prescribed information from the customer data, such as "product name xxx printer purchasing case" as a case name, "April 1" as an occurrence date, "company A" as a sales company cooperatively performing business activities, "Mr. Kohno" as a name of a sales person in charge, "PR0001" as a product code, etc., so as to generate and store case number data in the RAM 12 (in step S3). Then, the SFA server 1 retrieves and reads "10003" as the largest case number from the case number file 153 shown in Fig. 4 (in step S4), and stores "10004" by incrementing the largest case number by "1" in the RAM 12 (in step S5).

Then, the SFA server 1 generates case number related data 153₁ indicating "product name xxx printer purchasing case" as a case name, "April 1" as an occurrence date, "company A" as a sales company that cooperatively performs business activities, "Mr. Kohno" as a name of a sales person, "PR0001" as a product code, etc., for the case number "10004" as shown in Fig. 4. The SFA server 1 then stores the generated case number corresponding data 1531 in the case number file 153 (in step S6), and terminates the operation.

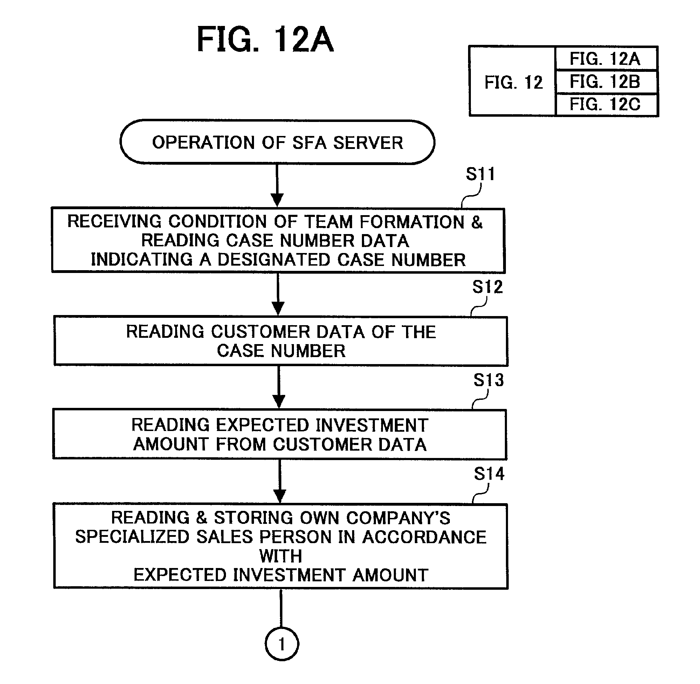

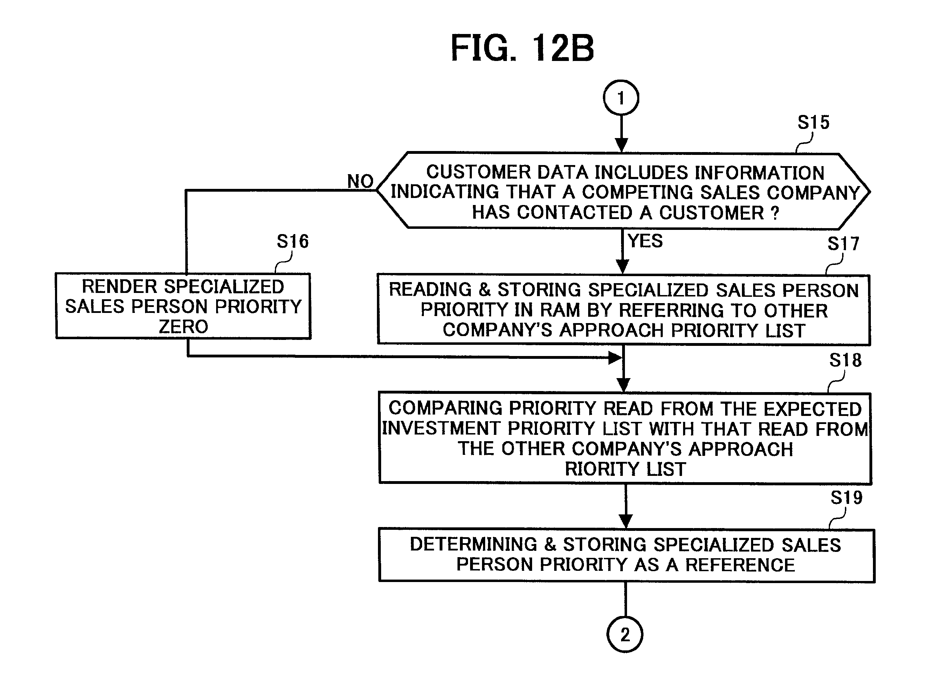

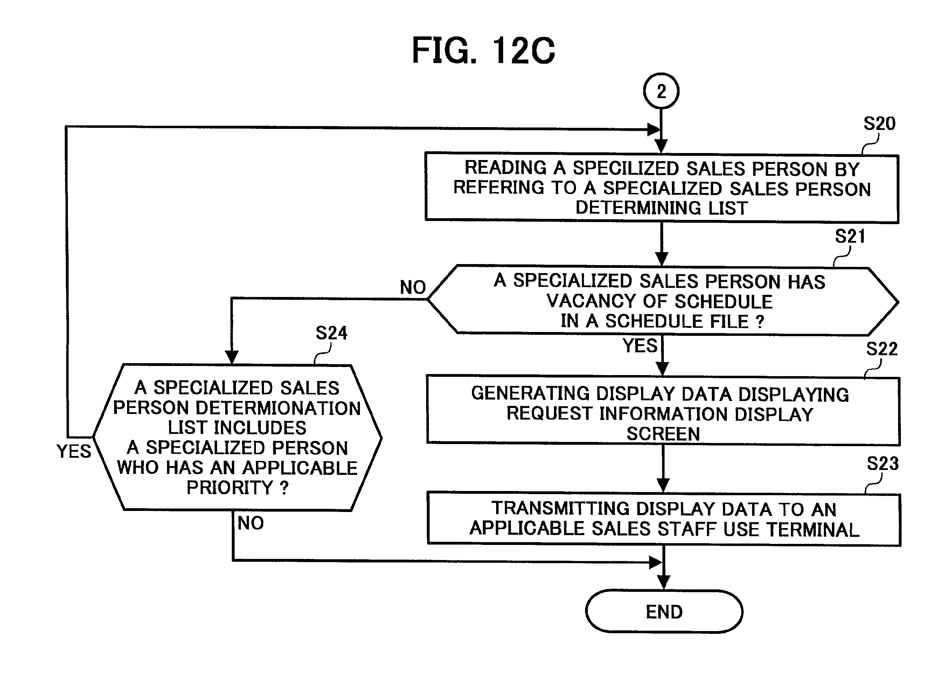

The operation of requesting a sales team for sales team formation is now described with reference to Fig. 12 showing a flowchart.

When the sales staff use terminal 2 of the sales person "Mr. kohno" for example, designates a specialized sales person of its own company or sales company (herein after simply referred to as a specialized sales person), who will form a sales team from PM 1:00 to 4:00 on May 1 for the case "10004", and instructs the SFA server 1 to transmit such a sales team formation request to prescribed applicable sales staff use terminals 2, the SFA server 1 reads case number data 153₁ given the case number of "10004" from the case number file 153.

The SFA server 1 then reads customer data including "product name xxx printer purchasing case" as a case name, "April 1" as an occurrence date, "company A" as a sales company, "Mr. Kohno" as a name of a sales person in charge, and "PR0001" as a product code included in the case number correspondence data 153₁ from the customer DB 152 (in step S12).

The SFA server 1 then reads an expected investment amount, for example "1,7 million Yen", of the customer from the customer data (in step S13).

After reading the expected investment amount of "1,7 million Yen", the SFA server 1 refers to the expected investment priority list 158, and reads and stores a specialized sales person priority level "3" serving as a reference for determining a prescribed own company's specialized sales person in charge, who forms a sales team (in step S14). In such a situation, if the priority "0" is read as a specialized sales person priority by the SFA server 1, such a case is regarded as being needles to form a sales team with the prescribed own company's specialized sales person.

Subsequently, the SFA server 1 determines if the read customer data includes information representing that a competitive sales company has contacted the customer (in step S15).

If the competitive sales company has not yet contacted the customer (i.e., No in step S15), the SFA server 1 determines a prescribed specialized sales person priority, which serves as a reference for determining a specialized sales person who forms the sales team, as "0". The SFA server 1 then stores such a specialized sales person priority "0" in the RAM 12 (in step S16) and makes transition of the process to step S18. In contrast, if a sales company A, for example, has contacted the customer (i.e., Yes in step S15), the SFA server 1 refers to a rival company's approach priority list 157, and reads and stores the level "2" as a specialized sales person priority in the RAM 12 (i.e., Yes in step S17). Such a priority is given in accordance with a sales step.

After storing the specialized sales person priority "2" in the RAM 12, the SFA server 1 compares the specialized sales person priority "3" with that of the specialized sales person priority "2" (in step S18), and determines the specialized sales person priority "3" as a priority for this case (in step S19). Then, the SFA server 1 refers to the specialized sales person list 156 shown in Fig. 7, and reads and stores a corresponding specialized sales person "Mr. Otsugawa" having the specialized sales person priority "3" for the business meeting on printer purchasing in the RAM 12 (in step S20).

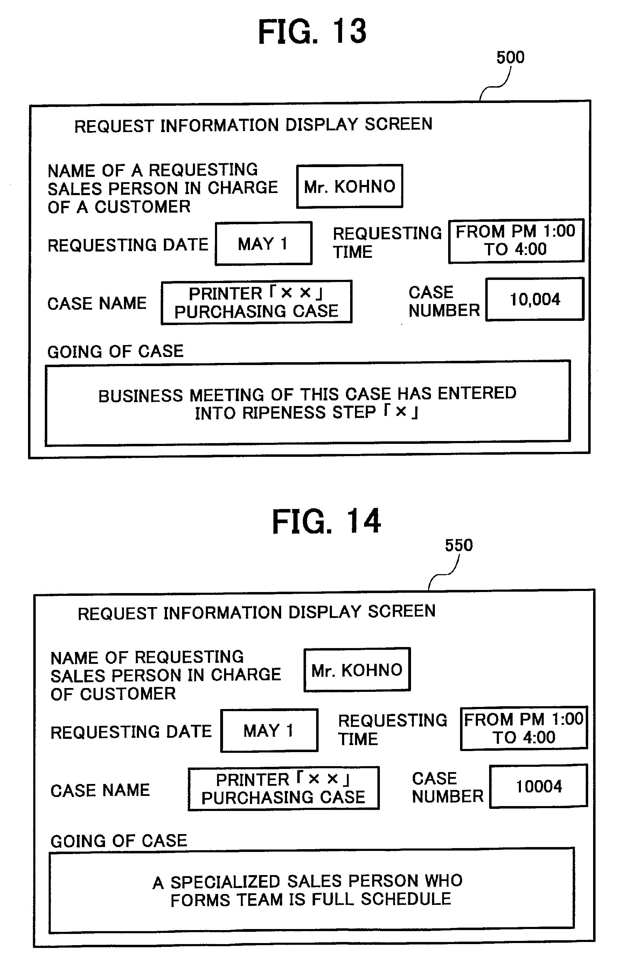

Subsequently, the SFA server 1 refers to the schedule file 159 and determines if a schedule of the Mr. Otsugawa is void from PM 1:00 to 4:00 on May 1 (in step S21). If the SFA server 1 determines that the schedule of the Mr. Otsugawa is void (i.e., Yes in step S21), the SFA server 1 generates display data that displays a display screen 500 indicating request information as shown in Fig. 13 on the sales staff use terminal 2 of the Mr. Otsugawa (in step S22), and transmits such display data to the sales staff use terminal 2 of the Mr. Otsugawa (in step S23). Thereby, the process is terminated.

Upon receipt of the display data, the sales staff use terminal 2 of Mr. Otsugawa stores the display data in the memory 25. Upon receipt of an instruction as to displaying of the display data on the display 24 through the operation of Mr. Otsugawa, the sales staff use terminal 2 displays the display data on the display 24.

In contrast, if the SFA server 1 determines that the schedule of the Mr. Otsugawa is booked (i.e., No in step S21), the SFA server 1 determines if a specialized sales person who has a specialized sales person priority "3" exists beside Mr. Otsugawa (in step S24).

If the SFA server 1 determines that the other specialized sales person exists (i.e., Yes in step S24), the SFA server 1 makes transition of the process to step S20, and performs the same operation as described earlier. In contrast, if the SFA server 1 determines that the other specialized sales person does not exist (i.e., No in step S24), the SFA server 1 transmits display data that displays a display screen 550 representing that the schedule of the sales person who forms a sales team has been already booked as shown in Fig. 14 to the sales staff use terminal 2 of the Mr. Kohno.

Upon receipt of the display data, the sales staff use terminal 2 of the Mr. Kohno stores and displays the receipt display data when operated.

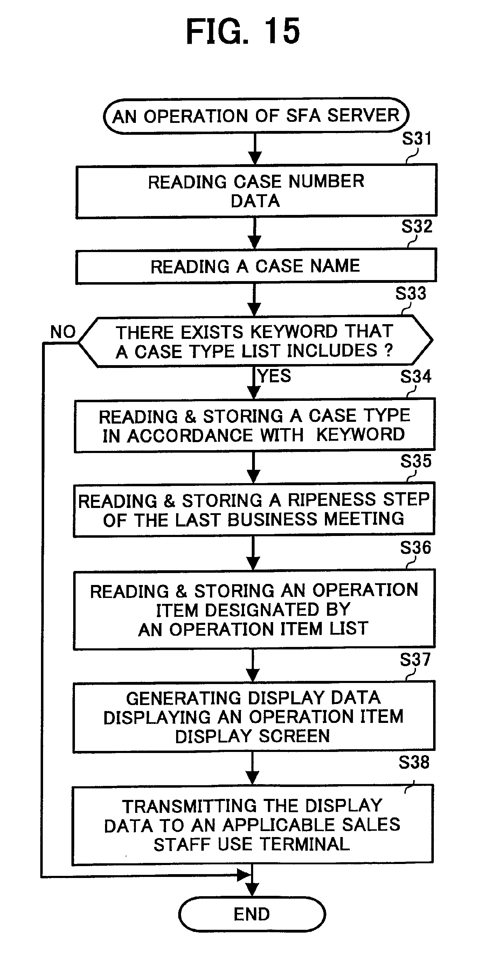

An operation of notifying operation items when a sales team performs business activities is now described with reference to Fig. 15. Upon receiving an instruction from the sales staff use terminal 2 of Mr. Kohno as to notification of operation items, for example, of a case number "10004" to the sales staff use terminals 2 of him and a specialized sales person or a sales person of the sales company so to form a sales team, the SFA server 1 reads case number related data 153₁ indicating the case number "10004" from the case number file 153 of Fig. 4 (in step S31). Then, the SFA server 1 reads a case name of "product xxx printer purchasing case" included in the case number related data 153₁ (in step S32).

The SFA server 1 subsequently determines if a keyword included in the case type list is included in the case name of "product xxx printer purchasing case" (in step S33). If SFA server 1 determines that the keyword is excluded from the case name (i.e., No in step S33), for example, the SFA server 1 terminates the operation. In contrast, if SFA server 1 determines that the keyword is included in the case name due to the fact that, the case type list 154 includes the keyword "a printer" (i.e., Yes in step S33), the SFA server 1 reads and stores the code "A" in the RAM 12 as a case type given to "a printer" (in step S34).

After storing the code "A" in the RAM, the SFA server 1 reads a ripeness step, for example "5", marked in the last business meeting from the customer data (such as a record of visiting) of the sales person "Mr. Kohno" stored in the customer DB 152, and stores it in the RAM 12 (in step S35).

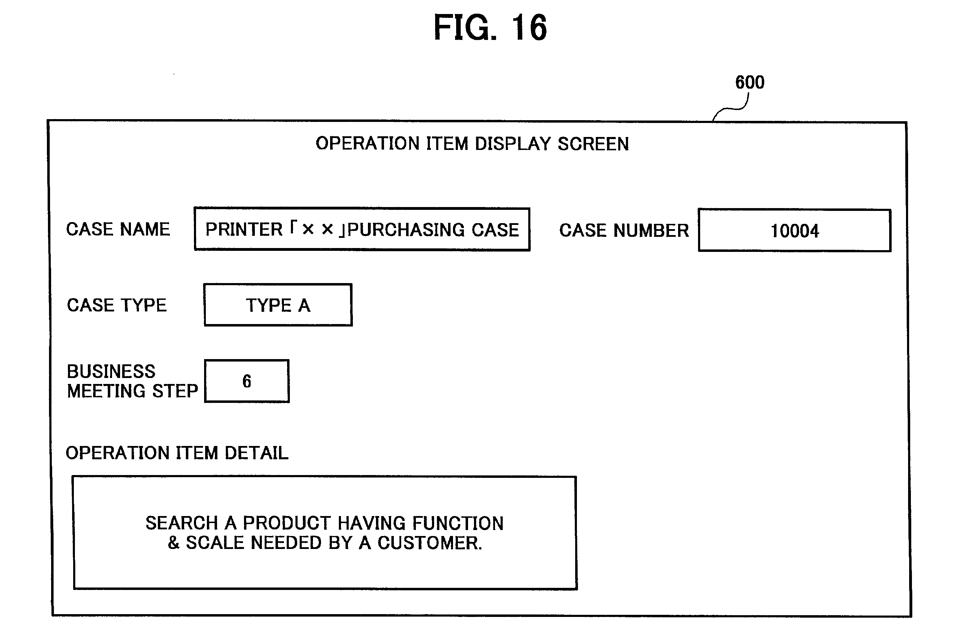

In accordance with the "type A" and ripeness step "5", the SFA server 1 reads from the operation item list 155 of Fig. 5 and stores in the RAM 12 an operation item indicating "research if a product having a function and scale satisfying customer needs exists" assigned to a situation when the case type is "A" and ripeness step is "5", (in step S36). Then, the SFA server 1 generates display data displaying the operation item display screen 600 as shown in Fig. 16 on the sales staff use terminal 2 while using the above-described operation items stored in the RAM 12 (in step S37).

Then, the SFA server 1 transmits the display data to sales staff use terminals 2 of Mr. Kohno as a (progress step confirmation) request source, and a specialized sales person or sales person of a sales company, who will forms a sales team, via a LAN 3 and Internet 4 (in step S38) or the like, and terminates the operation.

Upon receipt of the display data from the SFA server 1, the sales staff use terminals 2 of Mr. Kohno and either a specialized sales person or a sales person of a sales company, who will form a sales team, stores the display data in the memory apparatus.

Then, these sales staff use terminals 2 and 3 display the operation item display screens including the display data stored in the memory on respective display sections in accordance with an operation of an operator.

Thus, the present invention resides also in a highly efficient search algorithm used to select and schedule a specialized sales person. According to the present invention the search can be performed automatically, e.g. by executing computer program code sections on a data processing or computing means. Preferably and as set forth above a plurality of search criteria may be used for selecting an appropriate specialized sales person. Amongst others, these search criteria may comprise the following: the specialized sales person priority, the ripeness of the business for which purpose a ripeness value may be computed and used automatically, the priority of a competitor, the (expected) investment amount, the availability of the specialized sales person for a date of a business or sales meeting to be scheduled by the system according to the present invention and the like.

According to another preferred embodiment of the present invention, once a first plurality of specialized sales persons has been selected on the basis of a first search criterion, the total number of potentially available sales persons is reduced to a first subset of sales persons satisfying the first search criterion, said first subset consisting of the first plurality of specialized sales persons. Once a second search criterion is used in addition to the first search criterion, according to another preferred embodiment the search is not continued in the complete set of potentially available sales persons but instead only in the first subset. All sales persons of the first subset satisfying the second search criterion then form a second subset of specialized sales persons. As the number of specialized sales persons of the first subset will be smaller than the total number of potentially available sales persons, the computing time and computing power required for performing the second search step will be reduced. The above process is then iteratively continued until all search criteria used by the system and method finally reveal one or more appropriate sales persons.

Thus, according to the above other preferred embodiment the requirements with regard to computing time and computing power can be reduced as the search is not iteratively performed on the complete set of all potentially available sales persons but is instead focussed on the above first, second .... subsets.

### ADVANTAGES

According to the business management system of this embodiment, since the SFA server 1 determines a sales person who forms a sales team, and transmits a sales team formation request to the sales person, the sales person forming a sales team can be efficiently determined. Thus, labor and time required therefor can be suppressed. Further, according to the business management system of this embodiment, the SFA server 1 refers to schedule data stored in the schedule file 159, and designates a prescribed available sales person in order to form a sales team. Unproductive transmission of request information can be suppressed. Further, since a specialized sales person is designated from a specialized person determination list 156 in accordance with specialized sales person priorities stored in a rival company's approach priority and expected investment amount priority lists 157 and 158, a sales person can be designated in accordance with condition of a business meeting of a case.

Although the business management system of the above-described embodiment designates a priority in selecting a specialized sales person in accordance with other company's approach priority and expected investment amount priority lists 157 and 158, it is not limited thereto, and a list including prescribed items designating a priority can be optionally employed upon needs.

According to the present invention, a request for sales team formation can be efficiently and automatically performed through a network when a sales person forms a sales team and performs operation activities. Further, labor and time can be suppressed, or in some case, omitted when a request for sales team formation is transmitted. Further, the requirements of the system and method with regard to computing time and computing power required can be reduced.

## Claims

1. A business management system for forming a sales team
through a network (4) for a prescribed business meeting, said business management system comprising:
a business meeting data memory (1, 15) stored with business meeting data representing details of a business meeting held with a customer;
a business meeting data reading device (1) configured to read prescribed business meeting data of a prescribed case from the business meeting data memory;
a determining device (1) configured to determine if the prescribed case requires sales team formation for a business meeting in accordance with the business meeting data of the prescribed case;
a sales person specifying device (1) configured to specify a sales person who forms a sales team, if the prescribed case needs sales team formation;
a request information generating device (1) configured to generate request information requesting team formation; and
a request information transmitting device (1) configured to transmit the request information to a terminal (2-1)of the specified sales person.

2. The business management system, according to claim 1, further comprising:
a priority data memory stored with data of priority given among prescribed business meeting levels included in the business meeting data;
a sales person priority memory (156) stored with data of sales persons and priorities assigned thereto per a business meeting objective in forming a sales team; and
a priority designating device configured to designate prescribed priority stored in the priority data memory in accordance with the contents of the business meeting data of the prescribed case,
wherein said sales person specifying device (1) refers to the designated prescribed priority data and specifies the sales person having the designated prescribed priority.

3. The business management system, according to claim 2, wherein said prescribed business meeting level is one of an expected investment amount and a rival company who approaches a customer.

4. The business management system, according to any one of claims 2 and 3, further comprising a schedule data memory (159) stored with schedule data representing schedule of sales persons capable of forming a sales team, wherein said sales person specifying device refers to the schedule data, and specifies an available sales person having the designated prescribed priority as a sales person who forms a sales team.

5. The business management system, according to any one of claims 1 to 4, further including a going information obtaining device configured to obtain going information representing going of the case from the business meeting data; wherein said going information is included in the request information.

6. The business management system, according to any one
of claims 1 to 5, further comprising:
a business meeting data inputting device configured to input business meeting data;
a case identifying data memory stored with case identifying data that identifies a case included in the business meeting data;
a case identifying data generating device configured to generate case identifying data from one or more prescribed items included in the business meeting data; and
a case identifying data writing device configured to write case identifying data in the case identifying data memory.

7. The business management system, according to claim 6, wherein said one or more prescribed data includes at least any one of an occurrence date of a business meeting, a name of a sales company whom a business meeting has been cooperatively held, a name of a sales person who has held a business meeting with a customer, and a name of a product on which a business meeting has been held.

8. The business management system, according to any one of claims 1 to 7, further comprising:
a case type determining device configured to determine a case type in accordance with characteristics of the case indicated by the business meeting data;
an activity information generating device configured to generate information of activities to be performed by a sales person forming a sales team in accordance with the case type; and
an activity information transmitting device configured to transmit the activity information to a terminal of the sales person forming the sales team.

9. A method for forming a sales team through a network in a prescribed business meeting, said method comprising the steps of:
storing business meeting data in a business meeting data memory;
reading prescribed business meeting data of a prescribed case from the business meeting data memory;
determining if the prescribed case requires sales team formation in a business meeting from the business meeting data of the prescribed case;
specifying a sales person who forms a sales team, if the business meeting of said case needs sales team formation;
generating request information requesting team formation; and
transmitting the request information to a terminal of the specified sales person.

10. The method according to claim 9, further comprising the steps of:
storing priorities given in accordance with a prescribed business meeting level indicated by the business meeting data; and
referring to the priorities and designating a prescribed priority and specify a prescribed sales person having the designated priority so as to form the sale team.

11. The method according to claim 10, wherein said prescribed business meeting level is one of an expected investment amount and a rival company who approaches a customer.

12. The method according to any one of claims 10 and 11, further comprising the steps of:
referring to previously stored schedule data representing schedule of sales persons capable of forming a sales team; and
designating an available sales person having a designated priority as a sales person who forms the sales team.

13. The method according to any one of claims 9 to 12, further comprising the steps of:
obtaining going information representing going of the case from the business meeting data; and
including the going information in the request information.

14. The method according to any one of claims 9 to 13, further comprising the steps of:
inputting business meeting data;
generating case identifying data for identifying a case name included in the business meeting data from one or more prescribed items included in the business meeting data; and
storing case identifying data in the memory apparatus.

15. The method according to claim 14, wherein
said prescribed item includes at least any one of an occurrence date of a business meeting, a name of a sales company whom a business meeting has been cooperatively held, a name of a sales person who has held a business meeting with a customer, and a name of a product on which a business meeting has been held.

16. The method according to any one of claims 9 to 15, further comprising the steps of:
designating a case type representing characteristics of a case in accordance with the business meeting data;
generating activity information representing activities to be performed by a sales person forming a sales team in the prescribed case; and
transmitting the activity information to a terminal of the sales person forming the sales team.

17. A computer readable program executing the following steps of procedure when read in the computer, said steps of procedure comprising:
reading prescribed business meeting data of a prescribed case from a business meeting data memory;
determining if the prescribed case needs sales team formation in a business meeting from the business meeting data of the prescribed case;
specifying a sales person who forms a sales team, if the business meeting of said prescribed case needs the sales team formation;
generating request information requesting team formation; and
transmitting the request information to a terminal of the specified sales person.

18. A computer program comprising program code means configured for performing all steps according to any of claims 9 to 16, when said computer program is executed on a data processing means, in particular on a computer.

19. The computer program comprising program code means according to claim 18 that are recorded on a computer readable data carrier.
